# EUROPÄISCHE PATENTSCHRIFT

(11) **EP 2 454 974 B1**
(45) Veröffentlichungstag und Bekanntmachung des Hinweises auf die Patenterteilung: **24.07.2013**
(21) Anmeldenummer: 11009053.7
(22) Anmeldetag: 15.11.2011
(51) Int. Cl.: A47G 19/34, A47G 19/24, B65D 83/06, G01F 11/26

(54) **Vorrichtung zur portionierten Abgabe von riesel- oder fließfähigem Material**
Device for portioned dispensing of free-flowing or flowable material
Dispositif de dépôt portionné de matériaux visqueux ou versables

(30) Priorität: 23.11.2010 DE 102010052055
(43) Veröffentlichungstag der Anmeldung: 23.05.2012
(73) Patentinhaber: Bohmert, Stefan, 72108 Rottenburg (DE)
(72) Erfinder: Bohmert, Stefan, 72108 Rottenburg (DE)
(74) Vertreter: Ludewig, Rita

(56) Entgegenhaltungen:
- US-A- 1 648 785
- US-A- 3 353 725

## Beschreibung

Die Erfindung betrifft eine Vorrichtung zur portionierten Abgabe von riesel- oder fließfähigem Material, insbesondere zur Verwendung als Streuer oder Ausgießer in der Gastronomie.

Es ist eine Vielzahl solcher Vorrichtungen bekannt. So offenbart das Gebrauchsmuster G 85 23 574 U1 eine Vorrichtung zum portionierten Verstreuen von fein verteiltem, hygroskopischen Gut mit einem Vorratsbehälter, in den das Streugut über eine erste verschließbare Öffnung einfüllbar und aus dem es über mindestens eine zweite, während des Streuvorgangs nach unten weisende Öffnung austragbar ist.

Aufgabe dieser Vorrichtung ist es, das Gut während der Aufbewahrung im Vorratsbehälter gegen den Zutritt von feuchtigkeitshaltiger Außenluft zu schützen, wobei dieser Schutz ohne Zutun der Bedienperson selbsttätig erfolgen soll. Des weiteren soll jede Streubewegung eine möglichst genau dosierte Menge des Streuguts ausgeben, der Vorratsbehälter soll leicht wieder füllbar sein und auch bei undurchsichtigem Material des Vorratsbehälters soll von außen festzustellen sein, wenn das Streugut zur Neige geht.

Die Vorrichtung ist dadurch gekennzeichnet, daß der Vorratsbehälter mit der Austragsöffnung durch einen Führungskanal verbunden ist, in welchem ein Ventilkörper beweglich geführt ist, welcher aufgrund der an ihm angreifenden Schwerkraft während des Streuvorgangs der Austragsöffnung und nach Rückkehr der Austragsöffnung in eine im wesentlichen nach oben weisende Lage einer zwischen dem Führungskanal und dem Vorratsbehälter angebrachten, als Ventilsitz ausgebildeten Durchtrittsöffnung für das Streugut anliegt.

Nachteilig ist bei dieser Lösung die aufwendig konstruierte Vorrichtung, die bereits bei der Herstellung zeit- und kostenaufwendig ist. Trotz der verschiedenen Ausführungen der Ventilgestaltung hat diese Vorrichtung einen weiteren Nachteil, weil sie die Rückführung des nicht ausgegebenen Streugutes über den Führungskanal in den Vorratsbehälter sogar durch eine verzögerte Rückführung des Ventils besonders fördert. Dabei können Schmutzpartikel, die sich in der Austragsöffnung angesammelt haben mit dem rückfließenden Streugut in den Vorratsbehälter eingeschleußt werden und das dort vorgehaltene Streugut im

Vorratsbehälter mit verschmutzen. Das gleiche Problem wird gefördert durch die wiederholte Befüllbarkeit der Vorrichtung.

Aus der Druckschrift GM 76 34 178 ist ein Salzstreuer mit sichtbarer, genau dosierbarer Zuteilung des Materials und dessen Verschlußmöglichkeit bekannt. Der Salzstreuer ist dadurch gekennzeichnet, daß ein verschiebbares Ausschüttblech in einer, aus durchsichtigem Kunststoff oder Glas bestehenden Vorrichtung, das Kopfstück vom Vorratsbehälter trennen kann und daß das Kopfstück im Deckel eines Vorratsbehälters angeordnet ist. Dies Lösung sieht eine sichtbare und genaue Portionierung vor. Beim Gebrauch wird, durch Kippen des Streuers, durch den Spalt hinter dem vorgezogenen Ausschüttblech Material in das Kopfstück befördert, um dann nach Bedarf ausgestreut werden zu können. Auch dieser konstruktiv einfach gestaltete Streuer sieht ebenfalls vor, überschüssiges Material auf dem umgekehrten Weg wieder in den Vorratsbehälter zurück zu befördern.

Schließlich ist aus der DE 199 17 652 C2 eine Vorrichtung zum Portionieren fester oder flüssiger Stoffe bekannt. Sie ist gekennzeichnet durch ein, mit einem verschraubbaren Deckel, verschlossenes Gefäß mit einem schräg angeordneten Boden mit einem eingeformten trichterförmigen Auffangbehälter, einem Ausgußrohr mit trichterförmigen Ende, wobei der Auffangbehälter des Bodens und das trichterförmige Ende des Ausgußrohres jeweils ein definiertes Vollumen aufweisen und in einem bestimmbaren Abstand übereinander angeordnet sind und die beiden Vollumina etwa gleich groß sind.

Auch diese Vorrichtung läßt aus dem Ausgußrohr nicht ausgegebenes Material in den Vorratsbehälter zurückfließen und ist wieder auffüllbar, wodurch ebenfalls Verunreinigungen in das im Behälter vorgehaltene Material eingebracht werden können.

US 3 353 725 A offenbart eine Vorrichtung zur portionierten Abgabe von riesel- oder fließfähigem Material nach dem Obebegriff des Anspruchs 1.

Es war daher Aufgabe der Erfindung eine Vorrichtung zur portionierten Abgabe von riesel- oder fließfähigem Material so weiter zu entwickeln, daß sie hygienischen Anforderungen, insbesondere in der Gastronomie oder im Pflegebereich in höchstem Maße entspricht, die Verschmutzung der darin vorzugsweise bevorrateten Nahrungsmittel verhindert, indem die Vorrichtung zurückfließendes Material getrennt vom Vorratsbehälter aufnimmt und nicht wieder abgibt und nach dem Verbrauch des Inhaltes des Vorratsbehälters nicht wieder befüllbar ist und weggeworfen werden kann. Diese Anforderungen erfordern eine einfache und kostengünstige Konstruktion, die in Massenfertigung herstellbar ist und ökonomisch vertretbar als Wegwerfprodukt gehandelt werden kann.

Die Aufgabe wird durch eine Vorrichtung mit den Merkmalen des Anspruchs 1 gelöst.

Hervorzuheben ist es, daß, gemäß Anspruch 1, das Gehäuse zusätzlich mit einer separaten Restekammer ausgestattet ist, die unter der Vorratskammer und der Ausgabekammer angeordnet und die begrenzt ist durch eine, an der Innenseite einer Außenwand des Gehäuses, unterhalb der Vorratskammer und der Ausgabekammer abfallend verlaufende und endseitig zu einem Boden des Gehäuses abgewinkelte, Deckfläche mit einer, zur gegenüberliegenden Innenfläche der Außenwand angeordneten, Aufnahmeöffnung und den Boden des Gehäuses, Diese Restekammer ist so angeordnet, daß sie das aus der Ausgabeöffnung der Vorrichtung in das Gehäuse zurückfließende Material aufnimmt und nicht wieder freigibt. Sie verhindert durch die Separierung des rückfließenden Materials, daß Schmutzpartikel oder andere Fremdbestandteile in die, in der Vorratskammer vorgehaltenen Nahrungsmittel gelangen und verunreinigt werden.

Besonders vorteilhaft ist es außerdem, daß das Gehäuse, nach dem Befüllen des Vorratsbehälters mit riesel- oder fließfähigem Material, kraftschlüssig zu verschließen und ohne Zerstörung der Vorrichtung nicht wieder zu öffnen und nach Verbrauch des in der Vorratskammer befindlichen Materials nicht wieder befüllbar und zu entsorgen ist. Mit dieser Einweg- oder Wegwerfvorrichtung wird ein hoher Hygienestandart gewährleistet, der durch die Einfachheit der Konstruktion und der Herstellbarkeit auch ökonomisch für ein Wegwerfprodukt vertretbar ist.

Ein großer Vorteil besteht in dem einfachen konstruktiven Aufbau, gemäß der Ansprüche 1 bis 3, der erfindungsgemäßen Vorrichtung, in der die Vorratskammer durch eine Innenwand mit einer definierbaren Dosieröffnung mit der Ausgabekammer, die Ausgabekammer über eine Ausgabeöffnung und ein, über die Bedienbewegung mechanisch zu betätigendes, Öffnungs- und Schließventil mit der Ausgabeöffnung verbunden ist und unabhängig davon die Ausgabeöffnung des Gehäuses über einen offenen Kanal und eine Durchgangsöffnung sowie über die Aufnahmeöffnung mit der separaten Restekammer verbunden ist. Dadurch wird gewährleistet, daß die Materialien aus der Vorratskammer und der Ausgabekammer nicht wieder mit den Restmaterialien aus der Restekammer in Verbindung kommen können und das die Menge des aus der Vorratskammer auszugebenden Materials durch die in ihrer Größe definierbare Dosieröffnung und somit eine dem Bedarf entsprechende Dosiermenge bestimmbar ist.

Von großem Vorteil ist auch die Anordnung, der Aufbau und die Form der Ausgabekammer, gemäß den Ansprüchen 4 und 5, die an der Innenwand und am Boden der Vorratskammer rechtwinklig und parallel zur Vorratskammer an die Dosieröffnung anschließend, angeformt ist, vertikal in Richtung des Deckels verläuft, mit einem konischen Innenprofil und einer Ausgabeöffnung ausgestattet ist, die durch das Öffnungs- und Schließventil mittels der mechanischen Bedienbewegung zu öffnen oder zu verschließen ist. Dieser technisch einfache mechanische Öffnungs- und Schließmechanismus ist durch einen kugel- oder kegelförmigen Ventilkörper bestimmt, der an einem Führungsstab mittig und vertikal beweglich geführt ist, wobei der am Deckel des Gehäuses kraftschlüssig angeordnete Führungsstab vertikal in einer Tiefe in die Ausgabekammer hinein ragt, die mindestens dem Durchmesser der Ausgabeöffnung der Ausgabekammer entspricht. Diese einfache mechanische Ventilkonstruktion hat eine gewisse Beweglichkeit beim Öffnen der Ausgabeöffnung und eine bemerkenswerte Sicherheit beim Verschließen derselben.

Vorteilhaft ist auch die, gemäß Anspruch 7, zwischen der Innenwand des Vorratsbehälters und der Ausgabekammer angeformte Ableitfläche, die das, aus der Ausgabeöffnung, zurückfließende Material von der Innenwand der Vorratskammer und der Ausgabekammer weg leitet und ausschließlich in den offenen Kanal bis zur Durchgangsöffnung und weiter in die Restekammer lenkt.

Schließlich ist, gemäß Anspruch 8, der mechanische Verschluß an der Ausgabeöffnung des Gehäuses, in Form eines Siebes oder Gitters in Verbindung mit dem Mehrkammersystem der Gesamtkonstruktion von besonderem Vorteil. Beide gewährleisten, daß selbst manuell in die Ausgabeöffnung eingebrachte Fremdkörper die Vorrichtung weder verstopfen noch verunreinigen können, außerdem können solche Fremdkörper nicht in die Ausgabekammer oder gar in die Vorratskammer gelangen, weil sie sofort über den offenen Kanal und die Durchgangsöffnung in die Restekammer geleitet werden, aus der sie auch bei Benutzung der Vorrichtung nicht wieder herauskommen.

Die Erfindung soll nachstehend anhand eines Ausführungsbeispiels näher beschrieben werden, wobei gleiche Teile mit gleichen Ziffern gekennzeichnet sind. Die Zeichnungen zeigen dabei in
- Fig. 1: eine prinzipielle Vorderansicht auf einen Schnitt A-A der Vorrichtung,
- Fig. 2: eine Draufsicht auf die geschlossene erfindungsgemäße Vorrichtung
- Fig.3: eine prinzipielle Vorderansicht durch den Schnitt A-A der erfindungsgemäßen Vorrichtung im Ruhezustand,
- Fig.4: eine prinzipielle Vorderansicht durch den Schnitt A-A der erfindungsgemäßen Vorrichtung im Bedienzustand,
- Fig.5: eine prinzipielle Vorderansicht durch den Schnitt A-A der erfindungsgemäßen Vorrichtung bei Rückführung der Vorrichtung in den Ruhezustand.

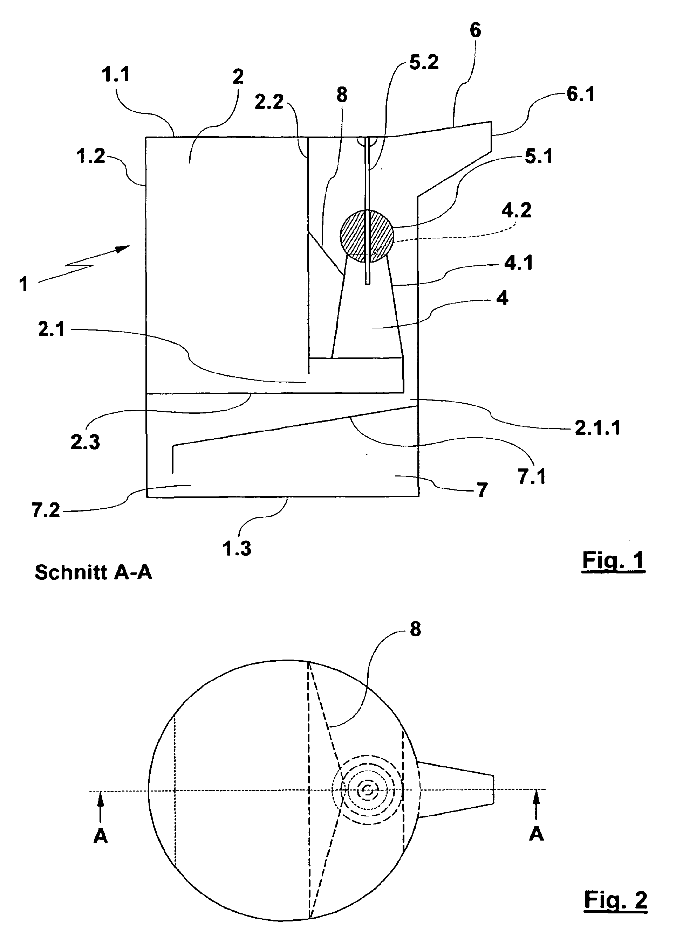

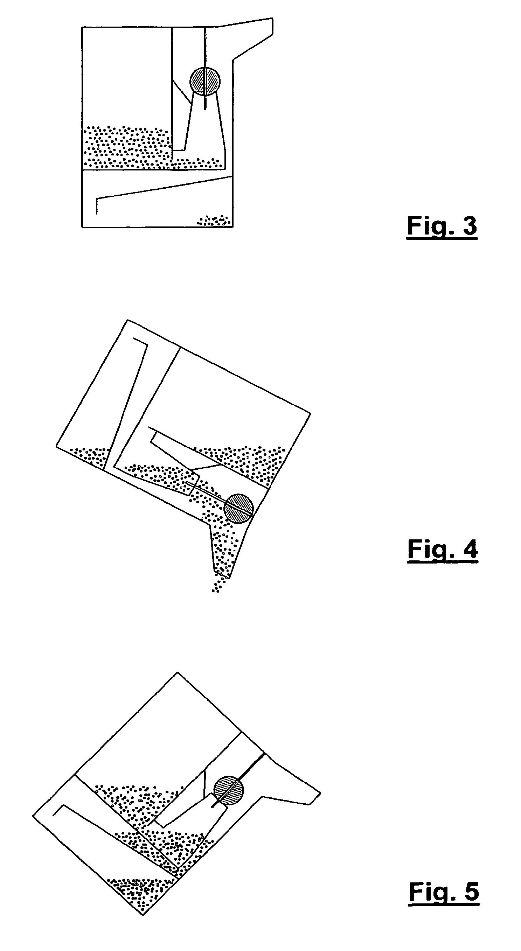

Im Ausführungsbeispiel, gemäß Fig.1, ist beispielhaft ein, vorzugsweise zylindrisch ausgeführtes, leeres Gehäuse 1 als Schnitt A-A und Fig.2 zeigt eine Draufsicht auf die geschlossene Vorrichtung aus Fig.1. Der Übersichtlichkeit halber wurden die Wandbereiche nur als Linien dargestellt. Das Gehäuse 1, dessen Deckel 1.1, Außenwand 1.2 und Boden 1.3, die Innenwand 2.2, der Boden 2.3 des Vorratsbehälters 2, die Ausgabekammer 4 mit ihrem konischen Innenprofil 4.1 und der Ausgabeöffnung 4.2, die Restekammer 7 mit ihrer Deckfläche 7.1 sowie die Ausgabeöffnung 6 die vorzugsweise mit einem, in den Zeichnungen nicht näher dargestellten, angeformten Gitter 6.1 abgeschlossen ist, bestehen vorzugsweise aus einem nahrungsmittelfreundlichen Kunststoff, dessen Teile beispielsweise miteinander verklebt, verschweißt oder kraftschlüssig miteinander vergossen sein können. Das Öffnungs- und Schließventil 5 ist aus einem vorzugsweise kugelförmigen Ventilkörper 5.1 und einem Führungsstab 5.2 zusammengesetzt. Der Führungsstab 5.2 ist an der Innenseite des, in den Zeichnungen nicht näher dargestellten, Deckels 1.1 1 derart kraftschlüssig angeordnet, daß er beim Verbinden des Deckels 1.1 mit der Oberkante des Gehäuses 1 vertikal über die Ausgabeöffnung 4.2 der Ausgabekammer 4 in diese in einer Tiefe hinein ragt, die mindestens dem Durchmesser der Ausgabeöffnung 4.2 entspricht. Der Durchmesser des kugelförmigen Ventilkörper 5.1 ist vorzugsweise ein Drittel größer ausgeführt, als der Durchmesser der Ausgabeöffnung 4.2 und weist eine mittige Durchgangsbohrung auf, durch die der Führungsstab 5.2 hindurch geführt wird. Der Durchmesser der Durchgangsbohrung ist geringfügig größer ausgeführt, als der Durchmesser des Führungsstabs 5.2 so, daß sich der Ventilkörper 5.1 leicht an dem Führungsstab 5.2 vertikal auf und ab bewegen kann, wobei die Vertikalbewegung und somit der Öffnungs- und Schließvorgang der Ausgabeöffnung 4.2 durch den Bedienvorgang und das Gewicht des Ventilkörpers 5.1 bestimmt wird. Selbstverständlich sind auch Öffnungs- und Schließventile 5 mit anderem konstruktiven Aufbau einsetzbar. Das Gehäuse 1 wird mit seiner Innenausstattung, der Restekammer 7, der Vorratskammer 2 und der Ausgabekammer 4 mit, der zwischen der Innenwand 2.2 des Vorratsbehälters 2 und der Ausgabekammer 4 angeformten Ableitfläche 8 und der Ausgabeöffnung 6 fertiggestellt. Danach wird die Vorratskammer 2 mit Material gefüllt. Der Deckel 1.1 ist an seiner Innenfläche kraftschlüssig mit dem Führungsstab 5.2 verbunden, der kugelförmige Ventilkörper 5.1 auf den Führungsstab 5.2 aufgesteckt und der Deckel 1.1 mit dem Führungsstab 5.2 in die Ausgabeöffnung 4.2 des Ausgabebehälters 4 gesteckt, so daß der Ventilkörper 5.1 die Ausgabeöffnung 4.2 verschließt. Danach wird der, mit dem Öffnungs- und Verschließventil 5 bestückte, Deckel 1.1 mit der Oberkante des Gehäuses 1 kraftschlüssig verbunden. In Fig. 3 befindet sich die erfindungsgemäße Vorrichtung im Ruhezustand. Ein Teil des Materials ist über die Dosieröffnung 2.1 in die Ausgabekammer 4 geflossen. Die Bedienperson kippt nun, gemäß Fig.4, die Vorrichtung zum Ausgeben an, wodurch das in der Ausgabekammer 4 vorhandene Material zur Ausgabeöffnung 4.2 fließt. Gleichzeitig bewegt sich der Ventilkörper 5.1 auf dem Führungsstab 5.2 in Richtung Deckel 1.1 und öffnet die Ausgabeöffnung 4.2, wodurch die dosierte Menge Material in Richtung Ausgabeöffnung 6 und aus dieser hinaus fließt. Jetzt bewegt die Bedienperson die Vorrichtung wieder in den Ruhezustand zurück. Dabei rutscht der Ventilkörper 5.1 auf dem Führungsstab 5.2 zurück auf die Ausgabeöffnung 4.2 und verschließt die Ausgabekammer 4. Gleichzeitig fließt nicht ausgegebenes Material von der Ausgabeöffnung 6 über den offenen Kanal zur Durchgangsöffnung 2.1.1 auf die abfällig zum Boden 1.3 angeordnete Deckfläche 7.1 der Restekammer 7 und von dort in die Aufnahmeöffnung 7.2 in die Restekammer 7 hinein. Beim nächsten Bedienvorgang wird das in der Restekammer 7 befindliche Material an das geschlossene Ende der Kammer bewegt, so daß es aus dieser nicht herausfließen kann. Der Bedienvorgang kann nun so lange wiederholt werden, bis die vorgehaltene Menge Material aus der Vorratskammer 2 aufgebraucht ist. Die Vorrichtung ist nicht wieder befüllbar, sie mit dem in der Restekammer 7 aufgenommenen, zurück geflossenen Material entsorgt werden kann.

**Zusammenstellung der verwendeten Bezugszeichen**

| | |
|---|---|
| 1 | Gehäuse, |
| 1.1 | Deckel, |
| 1.2 | Außenwand, |
| 1.3 | Boden, |
| 2. | Vorratskammer, |
| 2.1 | Dosieröffnung, |
| 2.1.1 | Durchgangsöffnung |
| 2.2 | Innenwand, |
| 2.3 | Boden, |
| | |
| 4. | Ausgabekammer, |
| 4.1 | konische Innenkontur, |
| 4.2 | Ausgabeöffnung, |
| 5 | Öffnungs- und Schließventil, |
| 5.1 | Ventilkörper, |
| 5.2 | Führungsstab, |
| 6 | Ausgabeöffnung |
| 6.1 | Sieb oder Gitter, |
| 7 | Restekammer, |
| 7.1 | Trennwand, |
| 7.2 | Aufnahmeöffnung |
| 8 | Ableitfläche, |

## Patentansprüche

1. Vorrichtung zur portionierten Abgabe von riesel- oder fließfähigem Material, aufweisend ein Gehäuse (1), in dem eine Vorratskammer (2) mit einer Dosieröffnung (2.1) für das Material, eine Ausgabekammer (4), ein Öffnungsund Schließventil (5) und eine Ausgabeöffnung (6), angeordnet sind, wobei durch den Ausgabevorgang der Bedienperson das Material portioniert über die Dosieröffnung (2.1) in die Ausgabekammer (4) zu befördern, das Öffnungs- und Schließventil (5) zu öffnen und das Material aus der Ausgabekammer (4) zur Ausgabeöffnung (6) des Gehäuses (1) zu transportieren ist und nach Beendigung des Ausgabevorgangs das Öffnungs- und Schließventil (5) sich wieder schließt, **dadurch gekennzeichnet,**
**daß** das Gehäuse (1) zusätzlich mit einer separaten Restekammer (7) ausgestattet ist, die unter der Vorratskammer (2) und der Ausgabekammer (4) angeordnet und die begrenzt ist durch eine, an der Innenseite einer Außenwand (1.2) des Gehäuses (1), unterhalb der Vorratskammer (2) und der Ausgabekammer (4) abfallend verlaufende und endseitig zu einem Boden (1.3) des Gehäuses (1) abgewinkelte, Deckfläche (7.1) mit einer, zur gegenüberliegenden Innenfläche der Außenwand (1.2) angeordneten, Aufnahmeöffnung (7.2) und den Boden (1.3) des Gehäuses (1),
**daß** die Vorratskammer (2) durch eine Innenwand (2.2) mit der definierbaren Dosieröffnung (2.1) mit der Ausgabekammer (4), die Ausgabekammer (4) über eine Ausgabeöffnung (4.2) und ein, über die Bedienbewegung mechanisch zu betätigendes, Öffnungs- und Schließventil (5) mit der Ausgabeöffnung (6) des Gehäuses (1) verbunden ist und unabhängig davon die Ausgabeöffnung (6) des Gehäuses (1) über einen offenen Kanal und eine Durchgangsöffnung (2.1.1) sowie über die Deckfläche (7.1) und die Aufnahmeöffnung (7.2) mit der separaten Restekammer (7) verbunden ist und
**daß** das Gehäuse (1), nach dem Befüllen des Vorratsbehälters (2) mit riesel- oder fließfähigem Material, kraftschlüssig zu verschließen, ohne Zerstörung nicht wieder zu öffnen und nach Verbrauch des in der Vorratskammer (2) befindlichen Materials nicht wieder befüllbar und zu entsorgen ist.

2. Vorrichtung zur portionierten Abgabe von riesel- oder fließfähigem Material, nach Anspruch 1, **dadurch gekennzeichnet, daß** die Vorratskammer (2) einerseits von einem nicht zu öffnenden Deckel (1.1) des Gehäuses (1) und andererseits von einem Boden (2.3), von einem Teil der Außenwand (1.2) des Gehäuses (1) und von einer, parallel zur der Außenwand (1.2) verlaufenden, Innenwand (2.2) begrenzt ist.

3. Vorrichtung zur portionierten Abgabe von riesel- oder fließfähigem Material, nach Anspruch 2, **dadurch gekennzeichnet, daß** die Innenwand (2.2) eine in Größe und Form definierbare Dosieröffnung (2.1) zum Boden (2.3) aufweist, der Boden (2.3) in horizontaler Richtung über die Innenwand (2.2) hinaus verläuft und zur gegenüberliegenden Innenfläche der Außenwand (1.2) eine definierbare Durchgangsöffnung (2.1.1) aufweist.

4. Vorrichtung zur portionierten Abgabe von riesel- oder fließfähigem Material, nach den Ansprüchen 2 und 3, **dadurch gekennzeichnet, daß** an der Innenwand (2.2) und am Boden (2.3) der Vorratskammer (2) rechtwinklig und parallel zur Vorratskammer (2) an die Dosieröffnung (2.1) anschließend, die Ausgabekammer (4) angeformt ist, die vertikal in Richtung des Deckels (1.1) verläuft, mit einem konischen Innenprofil (4.1) und einer Ausgabeöffnung (4.2) ausgestattet ist, die durch das Öffnungs- und Schließventil (5) mittels der mechanischen Bedienbewegung zu öffnen oder zu verschließen ist.

5. Vorrichtung zur portionierten Abgabe von riesel- oder fließfähigem Material, nach Anspruch 4, **dadurch gekennzeichnet, daß** das Öffnungs- und Schließventil (5) einen kugel- oder kegelförmigen Ventilkörper (5.1) und einem Führungsstab (5.2) aufweist, an dem der Ventilkörper (5.1) mittig und vertikal beweglich geführt ist, wobei der am Deckel (1.1) kraftschlüssig angeordnete Führungsstab (5.2) vertikal in einer Tiefe in die Ausgabekammer (4) hinein ragt, die mindestens dem Durchmesser der Ausgabeöffnung (4.1) der Ausgabekammer (4) entspricht.

6. Vorrichtung zur portionierten Abgabe von riesel- oder fließfähigem Material, nach einem der vorhergehenden Ansprüche, **dadurch gekennzeichnet, daß** die Ausgabeöffnung (6) und nach Abschluß des Bedienvorgangs, aus der Ausgabeöffnung (6) zurückfließendes Material über den offenen Kanal, die Durchgangsöffnung (2.1.1) auf die Deckfläche (7.1) und in die Aufnahmeöffnung (7.2) der Restekammer (7) fließt und dort unwiederbringlich verbleibt.

7. Vorrichtung zur portionierten Abgabe von riesel- oder fließfähigem Material, nach einem der vorhergehenden Ansprüche, **dadurch gekennzeichnet, daß** zwischen der Innenwand (2.2) des Vorratsbehälters (2) und der Ausgabekammer (4) eine Ableitfläche (8) angeformt ist, die das, aus der Ausgabeöffnung (6), zurückfließende Material (3) ausschließlich in den offenen Kanal bis zur Durchgangsöffnung (2.1.1) und weiter in die Restekammer (7) leitet.

8. Vorrichtung zur portionierten Abgabe von riesel- oder fließfähigem Material, nach Anspruch 1, **dadurch gekennzeichnet, daß** die Ausgabeöffnung (6) mit einem angeformten Sieb oder Gitter (6.1) abgeschlossen ist.

## Claims

1. Appliance, for the portioned delivery of pourable or flowable material, comprising a housing (1) in which a storage chamber (2) featuring a metering orifice (2.1) for the material, a discharge chamber (4), an opening- and closing valve (5) and a dispensing opening (6) are arranged, whereby through the operator's output process the material is portioned through the metering orifice (2.1), then fed to the discharge chamber (4), opening- and closing valve (5) to be opened and the material is transported from the discharge chamber (4) to the dispensing opening (6) of the housing (1) and after completion of the dispensing operation the opening and closing valve (5) closes again, **characterised in that**
the housing (1) is additionally provided with a separate rest chamber (7), disposed under the storage chamber (2) and the discharge chamber (4) and limited by an angled covering surface (7.1) extending on the inside of an outer wall (1.2) of the housing (1) below the storage chamber (2) and the discharge chamber (4) and ends at a base (1.3) of the housing (1), with a receiving opening (7.2) disposed on the opposite inner surface of the outer wall (1.2) and the base (1.3) of the housing (1),
the storage chamber (2) is connected through an inner wall (2.2) with the definable metering orifice (2.1), with the discharge chamber (4), the discharge chamber (4) through a discharge opening (4.2) and via mechanically actuated opening and closing valve (5) with the dispensing opening (6), and independently of the dispensing opening (6) of the housing (1) via an open channel, and through opening (2.1.1) and through the covering surface (7.1) and receiving opening (7.2), connected with the separate rest chamber (7) and
the housing (1), after filling the storage chamber (2) with pourable or flowable material is to be closed non-positively, not to be opened without destruction and after consumption the storage chamber (2) is not to be filled again and has to be disposed of.

2. Dispositif de distribution par portions de matière a écoulement libre ou coulante, selon la revendication 1, **caracterisé par le fait que** ladite chambre de réserve (2) est délimitée d'un côté par un couvercle (1.1) du boîtier (1), qui ne peut pas être ouvert et, de l'autre côté, par un fond (2.3), par une partie de la paroi extérieure (1.2) du boîtier (1) et par une paroi intérieure (2.2) s'étendant parallèlement à ladite paroi extérieure (1.2).

3. Dispositif de distribution par portions de matière à écoulement libre ou coulante, selon la revendication 2, **caractérisé par le fait que** la paroi intérieure (2.2) présente une ouverture de dosage (2.1) vers le fond (2.3), qui est définissable quant à la taille et à la forme, ledit fond (2.3) s'étend, dans la direction horizontale, au-delà de la paroi intérieure (2.2) et présente, en direction de la face intérieure opposée de la paroi extérieure (1.2), une ouverture de passage (2.1.1) définissable.

4. Dispositif de distribution par portions de matière à écoulement libre ou coulante, selon les revendications 2 et 3, **caractérisé par le fait que** ladite chambre de distribution (4) est surmoulée à angle droit sur la paroi intérieure (2.2) et sur le fond (2.3) de la chambre de réserve (2) et parallèlement à la chambre de réserve (2), suite à ladite ouverture de dosage (2.1), chambre de distribution qui s'étend verticalement en direction dudit couvercle (1.1), est munie d'un profilé intérieur conique (4.1) et d'une ouverture de distribution (4.2) qui peut être ouverte et fermée par ladite vanne d'ouverture et de fermeture (5) au moyen du mouvement mécanique de manoeuvre.

5. Dispositif de distribution par portions de matière à écoulement libre ou coulante, selon la revendication 4, **caractérisé par le fait que** ladite vanne d'ouverture et de fermeture (5) présente un corps de vanne sphérique ou conique (5.1) et une tige de guidage (5.2) sur laquelle ledit corps de vanne (5.1) est guidé de manière centrale et verticalement déplaçable, la tige de guidage (5.2) disposée par adhérence sur ledit couvercle (1.1) se projetant verticalement dans la chambre de distribution (4) sur une profondeur qui correspond au moins au diamètre de l'ouverture de distribution (4.1) de la chambre de distribution (4).

6. Dispositif de distribution par portions de matière à écoulement libre ou coulante, selon l'une quelconque des revendications précédentes, **caractérisé par le fait que** la matière revenant de ladite ouverture de distribution (6) après avoir terminé l'opération opening (2.1.1) on the covering surface (7.1) and into the receiving opening (7.2) of the rest chamber (7) and remains there irretrievably.

7. Appliance for the portioned delivery of pourable or flowable material according to one of the preceding claims, **characterised in that** between the inner wall (2.2) of the storage chamber (2) and the discharge chamber (4) a deflection surface (8) is formed, which guides the material (3) flowing back from the dispensing opening (6), only into the open channel up to the through opening (2 1.1), and further into the rest chamber (7).

8. Appliance for the portioned delivery of pourable or flowable material according to claim 1 **characterised in that** the dispensing opening (6) is closed with a formed sieve or grating (6.1).

## Revendications

1. Dispositif de distribution par portions de matière à écoulement libre ou coulante, comprenant un boîtier (1) à l'intérieur duquel sont disposés une chambre de réserve (2) ayant une ouverture de dosage (2.1) pour ladite matière, une chambre de distribution (4), une vanne d'ouverture et de fermeture (5) ainsi qu'une ouverture de distribution (6), dans lequel, par l'opération de distribution de l'opérateur, la matière peut être transportée par portions via ladite ouverture de dosage (2.1) dans ladite chambre de distribution (4), la vanne d'ouverture et de fermeture (5) peut être ouverte et la matière peut être transportée depuis ladite chambre de distribution (4) vers l'ouverture de distribution (6) du boîtier (1), et, après avoir terminé l'opération de distribution, la vanne d'ouverture et de fermeture (5) se referme, **caractérisé par le fait**
**que** ledit boîtier (1) est muni en sus d'une chambre de résidus (7) séparée qui est agencée au-dessous de la chambre de réserve (2) et de la chambre de distribution (4) et qui est délimitée par une surface de couverture (7.1) s'étendant en pente sur la face intérieure d'une paroi extérieure (1.2) du boîtier (1), au-dessous de ladite chambre de réserve (2) et de la chambre de distribution (4), et coudée à une extrémité vers un fond (1.3) du boîtier (1) et présentant une ouverture de réception (7.2) disposée vers la face intérieure opposée de la paroi extérieure (1.2), ainsi que par le fond (1.3) du boîtier (1),
**que** ladite chambre de réserve (2) est en communication avec la chambre de distribution (4) par une paroi intérieure (2.2) ayant l'ouverture de dosage (2.1) définissable, ladite chambre de distribution (4) est en communication avec ladite ouverture de distribution (6) du boîtier (1) via une ouverture de distribution (4.2) et ladite vanne d'ouverture et de fermeture (5) actionnable mécaniquement par le mouvement de manoeuvre, et, indépendamment de cela, ladite ouverture de distribution (6) du boîtier (1) est en communication avec la chambre de résidus (7) séparée via un canal ouvert et une ouverture de passage (2.1.1) ainsi que par ladite surface de couverture (7.1) et ladite ouverture de réception (7.2), et
**que** ledit boîtier (1), après avoir rempli la chambre de réserve (2) de matière à écoulement libre ou coulante, peut être fermé par adhérence, ne peut pas être rouvert sans être détruit et, après avoir consommé la matière présente dans la chambre de réserve (2), il ne peut pas être à nouveau rempli et peut être éliminé.

2. Dispositif de distribution par portions de matière à écoulement libre ou coulante, selon la revendication 1, **caractérisé par le fait que** ladite chambre de réserve (2) est délimitée d'un côté par un couvercle (1.1) du boîtier (1), qui ne peut pas être ouvert et, de l'autre côté, par un fond (2.3), par une partie de la paroi extérieure (1.2) du boîtier (1) et par une paroi intérieure (2.2) s'étendant parallèlement à ladite paroi extérieure (1.2).

3. Dispositif de distribution par portions de matière à écoulement libre ou coulante, selon la revendication 2, **caractérisé par le fait que** la paroi intérieure (2.2) présente une ouverture de dosage (2.1) vers le fond (2.3), qui est définissable quant à la taille et à la forme, ledit fond (2.3) s'étend, dans la direction horizontale, au-delà de la paroi intérieure (2.2) et présente, en direction de la face intérieure opposée de la paroi extérieure (1.2), une ouverture de passage (2.1.1) définissable.

4. Dispositif de distribution par portions de matière à écoulement libre ou coulante, selon les revendications 2 et 3, **caractérisé par le fait que** ladite chambre de distribution (4) est surmoulée à angle droit sur la paroi intérieure (2.2) et sur le fond (2.3) de la chambre de réserve (2) et parallèlement à la chambre de réserve (2), suite à ladite ouverture de dosage (2.1), chambre de distribution qui s'étend verticalement en direction dudit couvercle (1.1), est munie d'un profilé intérieur conique (4.1) et d'une ouverture de distribution (4.2) qui peut être ouverte et fermée par ladite vanne d'ouverture et de fermeture (5) au moyen du mouvement mécanique de manoeuvre.

5. Dispositif de distribution par portions de matière à écoulement libre ou coulante, selon la revendication 4, **caractérisé par le fait que** ladite vanne d'ouverture et de fermeture (5) présente un corps de vanne sphérique ou conique (5.1) et une tige de guidage (5.2) sur laquelle ledit corps de vanne (5.1) est guidé de manière centrale et verticalement déplaçable, la tige de guidage (5.2) disposée par adhérence sur ledit couvercle (1.1) se projetant verticalement dans la chambre de distribution (4) sur une profondeur qui correspond au moins au diamètre de l'ouverture de distribution (4.1) de la chambre de distribution (4).

6. Dispositif de distribution par portions de matière à écoulement libre ou coulante, selon l'une quelconque des revendications précédentes, **caractérisé par le fait que** la matière revenant de ladite ouverture de distribution (6) après avoir terminé l'opération de manoeuvre s'écoule via le canal ouvert, via ladite ouverture de passage (2.1.1) sur la surface de couverture (7.1) et dans l'ouverture de réception (7.2) de la chambre de résidus (7) et reste là perdue sans retour.

7. Dispositif de distribution par portions de matière à écoulement libre ou coulante, selon l'une quelconque des revendications précédentes, **caractérisé par le fait qu'**une surface de déviation (8) est surmoulée entre la paroi intérieure (2.2) de la chambre de réserve (2) et la chambre de distribution (4), qui dirige la matière revenant de l'ouverture de distribution (6) exclusivement dans le canal ouvert jusqu'à ladite ouverture de passage (2.1.1) et de là dans la chambre de résidus (7).

8. Dispositif de distribution par portions de matière à écoulement libre ou coulante, selon la revendication 1, **caractérisé par le fait que** ladite ouverture de distribution (6) est fermée par un tamis ou une grille (6.1) surmoulé(e).
